(19) Europäisches Patentamt
European Patent Office
Office européen des brevets

(11) **EP 4 528 851 A1**

(12) **EUROPEAN PATENT APPLICATION**
published in accordance with Art. 153(4) EPC

(43) Date of publication:
**26.03.2025 Bulletin 2025/13**

(51) International Patent Classification (IPC):
**H01M 4/36** (2006.01)

(21) Application number: 23938039.7

(22) Date of filing: **01.06.2023**

(52) Cooperative Patent Classification (CPC):
Y02E 60/10

(86) International application number:
**PCT/CN2023/097716**

(87) International publication number:
**WO 2024/239369 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2023 CN 202310575361**

(71) Applicants:
• **Beijing Easpring Material Technology Co., Ltd.**
**Beijing 100160 (CN)**
• **Easpring Technology (Changzhou) New Material Co., Ltd**
**Jintan District**
**Changzhou, Jiangsu 213200 (CN)**

(72) Inventors:
• **HU, Yiseng**
**Beijing 100160 (CN)**
• **LI, Shanshan**
**Beijing 100160 (CN)**
• **SONG, Shunlin**
**Beijing 100160 (CN)**
• **LIU, Yafei**
**Beijing 100160 (CN)**
• **CHEN, Yanbin**
**Beijing 100160 (CN)**

(74) Representative: **Nederlandsch Octrooibureau**
**P.O. Box 29720**
**2502 LS The Hague (NL)**

(54) **POSITIVE ELECTRODE MATERIAL AND PREPARATION METHOD THEREFOR, AND LITHIUM-ION BATTERY**

(57) The present invention relates to the field of lithium-ion batteries. Disclosed are a positive electrode material and a preparation method therefor, and a lithium-ion battery. The micro-residual stress of the positive electrode material measured by means of XRD is 0.01-0.15; the average diameter of the positive electrode material measured by a scanning electron microscope (SEM) is D, and the grain diameter measured by means of XRD is R, wherein D/R is 1.4-2.5. The positive electrode material has a micro-residual stress within a specific range, and the positive electrode material has a ratio (D/R) of the average diameter to the grain diameter within a specific range, so that the positive electrode material has significantly improved electrochemical performance and thermal stability.

FIG. 1

EP 4 528 851 A1

**Description**

**CROSS-REFERENCE TO RELATED APPLICATIONS**

This application claims the benefit of Chinese patent application No. 202310575361.8 filed on May 19, 2023, the contents of which are incorporated herein by reference.

**FIELD**

The present disclosure relates to the field of lithium-ion batteries, and more particularly, to a cathode material, a preparation method thereof, and a lithium-ion battery.

**BACKGROUND**

Power batteries are energy source of electric vehicles, and performance of the battery is crucial to the performances of new energy vehicles. Cathode material, as an important component of the power batteries, significantly affects the performances of batteries. During preparation process of the cathode material, excessive amount of residual alkali on the surface may often occur, leading to increased viscosity of a slurry and even occurrence of a jelly phenomenon during a homogenization process, which is not conducive to manufacturing and electrical performance of the battery. Compounds containing cobalt, as one of the common coating agents for the cathode materials, can effectively reduce the amount of residual alkali on the surface.

However, there are many types of compounds containing cobalt, including lithium cobaltate, cobalt oxide, and cobalt tetroxide. Different types of compounds containing cobalt may improve electrical performances of the cathode material or may cause deterioration of electrical performances of the cathode material.

**SUMMARY**

An object of the present disclosure is to provide a cathode material, a preparation method thereof, and a lithium-ion battery. The cathode material has the microscopic residual stress within the specific range, and the cathode material has the ratio of the average diameter to the grain diameter (D/R) within the specific range, enabling the cathode material to have significantly improved electrochemical performances and thermal stability.

For the above-mentioned object, a first aspect of the present disclosure provides a cathode material. The cathode material has a microscopic residual stress measured by X-ray Diffraction (XRD) and ranging from 0.01 to 0.15, and the cathode material has an average diameter D measured by scanning electron microscope (SEM) and a grain diameter R measured by XRD, where D/R ranges from 1.4 to 2.5.

A second aspect of the present disclosure provides a method for preparing a cathode material. The method includes: (1) mixing a precursor of the cathode material, a lithium source, and an additive optionally containing element G, to obtain a mixture I; (2) performing a first sintering on the mixture I under an air or oxygen atmosphere, to obtain an in-process product II of the cathode material; (3) mixing the in-process product II of the cathode material, a cobalt additive, and an additive optionally containing element M, to obtain a mixture III; and (4) performing a second sintering on the mixture III under an air or oxygen atmosphere, to obtain the cathode material. For the cobalt additive, a ratio of a peak intensity of a characteristic peak at 38.5° to a peak intensity of a characteristic peak at 37.4° measured by XRD is 1:(1.1 to 7.5). A constant temperature $T_1$ of the first sintering is lower than or equal to 1,000°C.

A third aspect of the present disclosure provides a cathode material prepared by the above-mentioned method.

A fourth aspect of the present disclosure provides a lithium-ion battery. The lithium-ion battery includes the above-mentioned cathode material.

Through the above-mentioned technical solutions, the cathode material, the preparation method thereof, and the lithium-ion battery according to the present disclosure have the following beneficial effects.

The cathode material according to the present disclosure has the microscopic residual stress within the specific range, and the cathode material has the ratio of the average diameter to the grain diameter (D/R) within the specific range, enabling the cathode material to have significantly improved electrochemical performances and thermal stability.

In the method for preparing the cathode material according to the present disclosure, the cobalt additive containing both cobalt oxyhydroxide and cobaltous hydroxide and having a specific XRD structure, particle size, and particle size distribution is used as a coating agent to prepare the cathode material. In this way, lattice defects in the matrix of the cathode material can be compensated, thereby improving structural stability and electrochemical performances of the cathode material prepared with the cobalt additive.

In addition, the cobalt additive of the present disclosure, as the coating agent, can be well coated on the surface of cathode particles during the coating and mixing process, without occurring uneven coating or agglomeration of the coating agent.

Further, compared with conventional single additive of cobalt oxyhydroxide or cobaltous hydroxide, the cobalt additive of the present disclosure can significantly improve the electrochemical performances of the cathode material, enhancing and improving charge and discharge capacity, cycle retention rate, and safety performance of the lithium-ion battery containing the cathode material.

In addition, the method has simple process and can be easily used for mass production.

**BRIEF DESCRIPTION OF THE DRAWINGS**

FIG. 1 is XRD patterns of cobalt additives of Example 2 and Comparative Example 1;

FIG. 2 is an SEM image of a cathode material of Example 1;

FIG. 3 is an SEM image of a cathode material of Example 12; and

FIG. 4 is DSC patterns of cathode materials of Example 1, Comparative Example 3, and Comparative Example 4.

**DETAILED DESCRIPTION**

The endpoints of the ranges and any values disclosed herein shall not limited to the exact range or value, and those ranges or values should be understood to include values close to those ranges or values. For numerical ranges, endpoints of the respective ranges, an endpoint of respective ranges and an individual point value, and individual point values may be combined with each other to obtain one or more new numerical ranges, which should be deemed to be specifically disclosed herein.

A first aspect of the present disclosure provides a cathode material. The cathode material has a microscopic residual stress measured by XRD and ranging from 0.01 to 0.15, and the cathode material has an average diameter D measured by SEM and a grain diameter R measured by XRD, where D/R ranges from 1.4 to 2.5.

In the present disclosure, the cathode material has the microscopic residual stress within the specific range and the ratio of the average diameter to the grain diameter (D/R) within the specific range, enabling the cathode material to have excellent electrochemical performances and thermal stability.

Specifically, in the present disclosure, when D/R in the cathode material satisfies the range defined by the present disclosure, interface resistance between the cathode material particles and contact area of the cathode material particles with an electrolyte and a conductive material can be maintained within reasonable ranges, while grains can have good crystallinity and size, thereby maintaining unobstructed lithium-ion diffusion path and shortening a diffusion distance. In this way, a reaction rate can be increased, and ultimately, the cathode material can have low resistance and excellent initial charge and discharge efficiency.

Further, in the present disclosure, a finished product of the cathode material is prepared through coating and sintering. Cobalt, as a coating agent, can make up for the lattice defects inside the cathode material without causing changes in the valence state of elements nickel and manganese in the cathode material. In this way, the stability of the material is improved, and ultimately, the cathode material can have low microscopic residual stress, indicating that the cathode material has excellent structural stability and is not prone to cracking during the preparation process.

In the present disclosure, the grain diameter R of the cathode material refers to a grain diameter calculated based on analysis with Riedel's method on a powder X-ray diffraction pattern, which is obtained by powder X-ray diffraction measurement using CuK$\alpha$ rays. Software for the analysis with Riedel's method includes, but is not limited to, TOPAS, Rietan, JANA, and JADE.

In the present disclosure, the average particle size D of the cathode material is an average diameter of 300 representative particles in an SEM image.

In the present disclosure, the microscopic residual stress of the cathode material is obtained by X-ray diffraction test and refinement. In the XRD test, a scanning range is $10° \leq 2\theta \leq 90°$, and a scanning speed is 5°/min; Topas refinement software and Pawley full spectrum fitting method are used.

Further, the microscopic residual stress measured by XRD of the cathode material ranges from 0.01 to 0.15.

Further, D/R ranges from 1.4 to 2.

According to the present disclosure, the average diameter D of the cathode material ranges from 1 $\mu$m to 3 $\mu$m.

The inventors of the present disclosure have found through research that a smaller average diameter D of the cathode material indicates smaller single crystal particles of the cathode material, and that the greater average diameter D indicates larger single crystal particles of the cathode material. If value of D is excessively small, the degree of single crystallization may be reduced, and adhesion between single crystal particles may increase, such that the single crystal particles may even approach a polycrystalline structure body due to difficulty in the single crystallization. Thus, cracking and pulverization of the cathode material may occur during the cycle, thereby resulting in a cycle drop. If the value of D is excessively great, paths for transmission of lithium ions inside the particles may increase, reducing transmission capacity of the lithium ions and increasing impedance of the transmission of the lithium ions, thereby leading to an increased internal resistance and reduced capacity of the battery. In the present disclosure, when the average diameter of the cathode material satisfies the above-mentioned range, the cracking and pulverization of the cathode material can be avoided, and it can be ensured that the cathode material has low impedance and high charge and discharge capacity.

Further, the average diameter D of the cathode material ranges from 1.5 $\mu$m to 2 $\mu$m.

According to the present disclosure, the grain diameter R of the cathode material ranges from 700 nm to 1,200 nm.

In the present disclosure, when the grain diameter R of the cathode material satisfies the above range, the cathode material has high grain purity and crystallinity, and a suitable diffusion path for the diffusion of the lithium ions may be provided, thereby further reducing the electrical resistance inside the single crystal particles. If the grain diameter R is excessively great, the diffusion path of the lithium ions during charging and discharging may become longer, such that the internal resistance of the single crystal particles is likely to become higher. If the grain diameter R is excessively small, it means that the crystallinity and purity of the cathode material particles are low, and the cathode material particles contain inactive crystalline phases and impurity phases without crystallinity, which inhibits the smooth deintercalation and intercalation of the lithium ions, thereby likely causing the electrical resistance to become higher.

Further, the grain diameter R of the cathode material ranges from 900 nm to 1,000 nm.

In the present disclosure, when the microscopic residual stress and the grain size of the cathode material simultaneously satisfy the ranges defined by the present disclosure, the cathode material can have a high charge and discharge capacity and excellent cycle performance at the same time.

According to the present disclosure, the cathode material has a median particle size $D_{50}$ ranging from 3 $\mu$m to 4.5 $\mu$m.

According to the present disclosure, a content of disordering nickel in the cathode material ranges from 0 wt% to 4 wt%.

In the present disclosure, the content of disordering nickel refers to a ratio of $Ni^{2+}$ undergoing lithium-nickel content of disordering nickel to the total Ni, which may be measured by XRD refinement.

In the present disclosure, the cathode material has a low content of disordering nickel, allowing the cathode material to have a high structural stability, in particular under a high voltage. Thus, dissolution and structural destruction of cathode active substance particles can be effectively inhibited, thereby improving chemical stability of the material and extending cycle life of the battery.

Further, the content of disordering nickel of the cathode material ranges from 0 wt% to 3 wt%.

In a specific embodiment of the present disclosure, the cathode material is a cobalt-coated cathode material.

According to the present disclosure, the cathode material includes a matrix and a coating layer coated on the matrix. The matrix has a composition represented by Formula I: $Li_{1+a}Ni_xMn_yCo_zG_bO_2$ Formula I, where: -0.05≤a≤0.1, 0≤b≤0.05, 0.5≤x<1, 0<y<0.5, and 0≤z<0.5; and G is selected from at least one of W, V, Ta, Zr, La, Ce, Er, Sr, Si, Al, Mg, and Y. The coating layer includes a lithium oxide compound containing element cobalt and/or an oxide containing element cobalt; and optionally, the coating layer further includes a lithium oxide compound containing element M and/or an oxide containing element M, where M is selected from at least one of B, Al, Nb, Mn, Mo, W, Si, Mg, Ti, and Zr.

Further, in Formula I, 0.01≤a≤0.1, 0≤b≤0.005, 0.5≤x<1, 0<y<0.2, and 0≤z<0.3; and G is selected from at least one of W, V, Ta, Zr, Sr, Si, and Y; and M is selected from at least one of B, Al, W, Mg, Ti, and Zr.

In the present disclosure, the lithium oxide compound containing element M and the lithium oxide compound containing element cobalt include at least one of Ni, Mn, and G, in addition to the metal elements M and Li or Co and Li.

According to the present disclosure, a molar amount of element cobalt n'(Co) in the coating layer, a molar amount of element M n(M) in the coating layer, and a total molar amount of metal elements other than Li [n(Ni)+n(Co)+n(Mn)+n(G)] in the matrix satisfy: 0.001≤n'(Co):[n(Ni)+n(Co)+n(Mn)+n(G)]≤0.05; and 0≤n(M):[n(Ni)+n(Co)+n(Mn)+n(G)]≤0.05.

In the present disclosure, when the coating layer containing element cobalt and element M in the cathode material is controlled to satisfy the above-mentioned ranges of content, migration speed and transmission efficiency of $Li^+$ can be improved, thereby increasing conductivity of the cathode material. In this way, the prepared cathode material can have higher reaction activity and utilization rate.

Further, the molar amount of element cobalt n'(Co) in the coating layer, the molar amount of element M n(M) in the coating layer, and the total molar amount of metal elements other than Li [n(Ni)+n(Co)+n(Mn)+n(G)] in the matrix satisfy: 0.01≤n'(Co):[n(Ni)+n(Co)+n(Mn)+n(G)]≤0.03; and 0≤n(M):[n(Ni)+n(Co)+n(Mn)+n(G)]≤0.01.

According to the present disclosure, the cathode material has a residual alkali content ranging from 1,000 ppm to 10,000 ppm.

In the present disclosure, the cathode material has a low residual alkali content on the surface and is coated with cobalt, such that the cathode material has a small volume change and heat change during the reaction, thereby improving thermal stability and safety of the lithium-ion battery containing the cathode material.

Further, the residual alkali content of the cathode material ranges from 1,000 ppm to 6,000 ppm.

In a specific embodiment of the present disclosure, when $0.5 \leq x < 0.8$, the residual alkali content of the cathode material ranges from 1,000 ppm to 3,000ppm, and preferably, from 2,000 ppm to 3,000 ppm.

In a specific embodiment of the present disclosure, when $0.8 \leq x < 1$, the residual alkali content of the cathode material ranges from 4,000 ppm to 6,000ppm, and preferably, from 4,000 ppm to 5,000 ppm.

In the present disclosure, as long as the cathode material has the characteristics described in the first aspect of the present disclosure, the lithium-ion battery containing the cathode material can have excellent electrochemical performances. As for the preparation method of the cathode material, as long as the cathode material described in the first aspect of the present disclosure can be prepared, it belongs to the protection scope of the present disclosure.

In the present disclosure, in order to further reduce the microscopic stress of the cathode material and the content of disordering nickel, and in order to improve thermal stability, preferably, a second aspect of the present disclosure further provides a method for preparing a cathode material. The method includes: (1) mixing a precursor of the cathode material, a lithium source, and an additive optionally containing element G, to obtain a mixture I; (2) performing a first sintering on the mixture I under an air or oxygen atmosphere, to obtain an in-process product II of the cathode material; (3) mixing the in-process product II of the cathode material, a cobalt additive, and an additive optionally containing element M, to obtain a mixture III; and (4) performing a second sintering on the mixture III under an air or oxygen atmosphere, to obtain the cathode material. For the cobalt additive, a ratio of a peak intensity of a characteristic peak at 38.5° to a peak intensity of a characteristic peak at 37.4° measured by XRD is 1:(1.1 to 7.5). A constant temperature $T_1$ of the first sintering is lower than or equal to 1,000°C.

In the method for preparing the cathode material according to the present disclosure, the cobalt additive containing both cobalt oxyhydroxide and cobaltous hydroxide is used as a coating agent. Cobalt oxyhydroxide and cobaltous hydroxide can be mutually converted. According to the changes in potential and pH value, a dynamic balance of $Co^{2+}$ and $Co^{3+}$ is achieved, allowing the performances of the coating layer to remain stable under different environments. The cobalt additive has a specific XRD structure, particle size, and particle size distribution, and it may compensate for the lattice defects in the matrix of the cathode material, thereby improving the structural stability and electrochemical performances of the finally prepared cathode material.

Specifically, a cobalt additive-coated cathode material is prepared by combining the cobalt additive with the in-process product II of the cathode material using a high-temperature solid phase method. At high temperature, cobaltous hydroxide can reduce the residual alkali content on the surface of the cathode material, improve the slurry efficiency, and improve the conductivity of the cathode material. Cobalt in cobalt oxyhydroxide has a valence of +3, which is the same as the average valence of nickel, cobalt, and manganese in the cathode material, such that it can smoothly enter the interior of the material to make up for the lattice defects without causing changes in the valence of elements nickel and manganese in the material. In this way, the material can be stabilized, and the microscopic residual stress of the cathode material can be reduced.

In the present disclosure, for the cobalt additive, the ratio of the peak intensity of the characteristic peak at 38.5° to the peak intensity of the characteristic peak at 37.4° measured by XRD is regulated by adjusting a content ratio of cobalt oxyhydroxide to cobaltous hydroxide. When the ratio of peak intensity is within the specific range, the cobalt additive added as a coating agent to the cathode material can effectively improve the electrochemical performances and thermal stability of the cathode material.

In addition, the cobalt additive of the present disclosure, as the coating agent, can be well coated on the surface of cathode particles during the coating and mixing process, without the occurrence of uneven coating or agglomeration of the coating agent.

Further, compared with conventional single additive of cobalt oxyhydroxide or cobaltous hydroxide, the cobalt additive of the present disclosure can significantly improve the electrochemical performances of the cathode material, enhancing and improving charge and discharge capacity, cycle retention rate, and safety performance of the lithium-ion battery containing the cathode material.

In the present disclosure, when the constant temperature $T_1$ of the first sintering is controlled to satisfy the above-mentioned range, the grain growth of the cathode material and the arrangement of the cathode material grains can be promoted, grain boundaries and gaps can be reduced, thereby facilitating the transportation of electrons/ions in space and improving the electrochemical performances. At the same time, the crystal structure of the material can be changed and optimized, and thus the stability of the material can be improved. In addition, the method has simple process and can be easily used for mass production.

Further, for the cobalt additive, the ratio of the peak intensity of the characteristic peak at 38.5° to the peak intensity of the characteristic peak at 37.4° measured by XRD is 1:(2 to 4.5)

Further, the constant temperature $T_1$ of the first sintering ranges from 700°C to 1,000°C.

According to the present disclosure, the cobalt additive has a median particle size $D_{(Co)50}$ ranging from 0.5 $\mu$m to

5 $\mu$m, and the cobalt additive has a particle size distribution $K_{(Co)90}=(D_{90}-D_{10})/D_{(Co)50}$ satisfying $0.8 \leq K_{(Co)90} \leq 2$.

In the present disclosure, by controlling the median particle size $D_{(Co)50}$ and the particle size distribution $K_{(Co)90}$ of the cobalt additive to satisfy the ranges defined in the present disclosure, production costs can be reduced and mass production can be achieved while ensuring that the prepared cathode material has excellent electrochemical performances. Specifically, when powder particles of the cobalt additive are excessively large, the coating uniformity of the in-process product II of the cathode material may deteriorate, and powder particles may even be partially gathered on the surface of the cathode material, thereby partially exposing the cathode material and affecting the electrochemical performances of the product. If the powder particles are excessively small, more sophisticated production equipment is required, and degree of damage to the equipment during the production process may increase sharply, resulting in an increase in the production costs, which is not conducive to industrial mass production.

Further, the median particle size $D_{(Co)50}$ of the cobalt additive ranges from 0.5 $\mu$m to 5 $\mu$m, and the particle size distribution $K_{(Co)90}=(D_{90}-D_{10})/D_{(Co)50}$ of the cobalt additive satisfies $1 \leq K_{(Co)90} \leq 1.8$.

In the present disclosure, the preparation method of the cobalt additive is not specifically limited, and the cobalt additive may be prepared by any conventional methods known in the art, as long as the prepared cobalt additive has the specific XRD structure defined in the present disclosure. Preferably, in the present disclosure, the cobalt additive is prepared by mixing and crushing cobalt oxyhydroxide and cobaltous hydroxide.

In the present disclosure, the mixture of cobaltous oxyhydroxide and cobaltous hydroxide can be crushed by conventional methods in the art, such as an airflow milling.

In the present disclosure, the amount of cobalt oxyhydroxide and cobaltous hydroxide and the crushing conditions are not specifically limited, as long as the cobalt additive can have the ratio of the peak intensity of the characteristic peak at 38.5° to the peak intensity of the characteristic peak at 37.4°, the median particle size $D_{50}$, and the particle size distribution $K_{90}$ that are defined in the present disclosure.

According to the present disclosure, a content of element Co ranges from 55 wt% to 75 wt% based on a total weight of the cobalt additive.

According to the present disclosure, a constant temperature duration $t_1$ of the first sintering is shorter than or equal to 15 hours, and preferably, from 6 hours to 12 hours.

In the present disclosure, the constant temperature $T_2$ of the second sintering is not specifically limited, as long as it satisfies $1{,}000°C \geq T_1 > T_2 \geq 300°C$. Specifically, the constant temperature $T_2$ ranges from 300°C to 800°C, and preferably, from 300°C to 700°C.

In the present disclosure, the constant temperature duration $t_2$ of the second sintering is not specifically limited, as long as it satisfies $15h \geq t_1 > t_2 \geq 5h$ is ensured. Specifically, the constant temperature duration $t_2$ ranges from 6 hours to 12 hours, and preferably, from 6 hours to 10 hours.

According to the present disclosure, a total molar amount of metal elements [n(Ni)+n(Mn)+n(Co)] in the precursor of the cathode material, a molar amount of element Li n(Li) in the lithium source, and a molar amount of element G n(G) in the additive containing element G satisfy: $0.95 \leq n(Li)/[n(Ni)+n(Mn)+n(Co)] \leq 1.1$, and $0 \leq n(G)/[n(Ni)+n(Mn)+n(Co)] \leq 0.05$.

Further, the total molar amount of metal elements [n(Ni)+n(Mn)+n(Co)] in the precursor of the cathode material, the molar amount of element Li n(Li) in the lithium source, and the molar amount of element G n(G) in the additive containing element G satisfy: $1 \leq n(Li)/[n(Ni)+n(Mn)+n(Co)] \leq 1.1$, and $0.0005 \leq n(G)/[n(Ni)+n(Mn)+n(Co)] \leq 0.03$.

In the present disclosure, the precursor of the cathode material is selected from nickel cobalt manganese oxide and/or nickel cobalt manganese hydroxide.

In the present disclosure, the type of the lithium source is not specifically limited, and the lithium source may be a conventional lithium source known in the art, such as lithium carbonate and/or lithium hydroxide.

In the present disclosure, the type of the additive containing element G is not specifically limited, and the additive containing element G may be a conventional compound capable of providing element G known in the art, such as an oxide containing G, a hydroxide containing G, or a carbonate containing G.

In the present disclosure, G is selected from at least one of W, V, Ta, Zr, La, Ce, Er, Sr, Si, Al, Mg, and Y.

According to the present disclosure, a total molar amount of metal elements [n(Ni)+n(Co)+n(Mn)+n(G)] in the in-process product II of the cathode material, a molar amount of element cobalt n'(Co) in the cobalt additive, and a molar amount of element M n(M) in the additive containing element M satisfy $0.001 \leq n'(Co)/[n(Ni)+n(Co)+n(Mn)+n(G)] \leq 0.05$, and $0 \leq n(M)/[n(Ni)+n(Co)+n(Mn)+n(G)] \leq 0.05$.

Further, the total molar amount of metal elements [n(Ni)+n(Co)+n(Mn)+n(G)] in the in-process product II of the cathode material, the molar amount of element cobalt n'(Co) in the cobalt additive, and a molar amount of element M n(M) in the additive containing element M satisfy $0.001 \leq n'(Co)/[n(Ni)+n(Co)+n(Mn)+n(G)] \leq 0.03$, and $0 \leq n(M)/[n(Ni)+n(Co)+n(Mn)+n(G)] \leq 0.03$ .

In the present disclosure, the type of the additive containing element M is not specifically limited, and the additive containing element M may be a conventional compound capable of providing element M known in the art, such as an oxide containing M, a hydroxide containing M, or a carbonate containing M.

In the present disclosure, M is selected from at least one of B, Al, Nb, Mn, Mo, W, Si, Mg, Ti, and Zr.

A third aspect of the present disclosure provides a cathode material prepared by the above-mentioned method.

A fourth aspect of the present disclosure provides a lithium-ion battery. The lithium-ion battery includes the above-mentioned cathode material.

The present disclosure are described in detail below by means of examples.

(1) Morphology test: obtained by testing with scanning electron microscope S-4800, HITACHI, Japan; and the average particle size D of the cathode material being calculated from 300 particles in the electron microscope image;

(2) Particle size $D_{50}$, $D_{10}$, and $D_{90}$: obtained by testing with Hydro 3000mu laser particle size analyzer, Marvern;

(3) XRD test: directly tested by rotating target diffractometer Smartlab 9KW (Rigaku Corporation) or/and obtained by refinement; the grain diameter R of the cathode material, the microscopic residual stress, and the ratio of the peak intensity of the characteristic peak at 38.5° to the characteristic peak at 37.4° in the cobalt additive being obtained by calculation; and a value of the lithium-nickel disorder being obtained by refinement calculation;

(4) Residual alkali content of the cathode material was measured using a potentiometric titrator, Metrohm, Switzerland;

(5) Mass percentage of element Co in the total compound was measured by inductively coupled plasma (ICP) atomic emission spectroscopy; and

(6) Electrochemical performance test: in the above-mentioned examples and comparative examples, the electrochemical performances of the cathode material were tested using a CR2025 button cell.

Preparation process of CR2025 button battery:

Preparation of electrode plate: a cathode material, conductive carbon black, and polyvinylidene fluoride (PVDF), according to a mass ratio of 95:3:2, were fully mixed with an appropriate amount of N-methylpyrrolidone (NMP) to form a uniform slurry. The slurry was coated on an aluminum foil and dried at 120°C for 12 hours. Then, the coated foil was stamped with a pressure of 100 MPa into a positive electrode plate with a diameter of 12 mm and a thickness of 3.2 mm. A loading amount of the cathode material was 15.5 mg/cm$^2$.

Assembly of battery: in an argon-filled glove box with a water content and an oxygen content that were both smaller than 5 ppm, the positive electrode plate, a separator, a negative electrode plate, and electrolyte were assembled into a CR2025 button battery, and the assembled battery was left to stand for 6 hours. A metal lithium plate with a diameter of 15.8 mm and a thickness of 1 mm was used as the negative electrode plate. A polypropylene porous membrane (Celgard 2325) with a thickness of 25 $\mu$m was used as the separator. A mixture of equivalent amounts of 1mol/L LiPF$_6$, ethylene carbonate (EC), and diethyl carbonate (DEC) was used as the electrolyte.

Electrochemical performance test: in the following examples and comparative examples, the electrochemical performances of the CR2025 button battery were tested using a Neware battery testing system (NEWARE TECHNOLOGY LIMITED, Shenzhen).

The charge and discharge voltage range was controlled to range from 2.8V to 4.5V. At a constant temperature of 60°C, the button battery was charged and discharged twice at 0.1C, and then charged and discharged for 80 cycles at 1C to evaluate the high-temperature cycle capacity retention rate of the cathode material.

Thermal stability test: Mettler DSC3+ was used to test the thermal stability of the material. The steps were as follows. The above battery was charged and discharged twice at 0.2C CC-CV and a voltage range ranging from 3V to 4.4V, and then charged to 4.4V at 0.2C CC-CV. After charging, the battery was disassembled and the cathode material was scraped from the electrode plate. Then, 1g of the cathode material scraped from the electrode plate was weighed for DSC test to evaluate the thermal stability of the cathode material.

The raw materials used in the examples and comparative examples were all commercially available products.

## Example 1

S1: Cobalt oxyhydroxide and cobaltous hydroxide were mixed, and a cobalt additive with $D_{50}$ of 0.96 $\mu$m was obtained by adjusting airflow mill crushing strength; for the cobalt additive, a ratio of a peak intensity of a characteristic peak at 38.5° to a peak intensity of a characteristic peak at 37.4° measured by XRD was 1:2; and the specific parameters of the cobalt additive were shown in Table 1;

S2: Ni$_{0.6}$Co$_{0.2}$Mn$_{0.2}$(OH)$_2$, lithium carbonate, and ZrO$_2$ were coated and mixed according to a molar ratio of [n(Ni)+n(Co)+n(Mn)]:n(Li):n(Zr)=1:1.03:0.0002 to obtain a mixture I;

S3: under an air atmosphere in a muffle furnace, the mixture I was subjected to a first sintering at a constant temperature $T_1$ of 950°C for a constant temperature duration $t_1$ of 8 hours, and the mixture was sieved after crushing with an airflow mill to obtain an in-process product II of the cathode material;

S4: the in-process product II of the cathode material, the cobalt additive obtained in step S1, and $Al_2O_3$ were coated and mixed according to a molar ratio of [n(Ni)+n(Co)+n(Mn)+n(Zr)]:n(Co):n(Al)=1:0.02:0.0001 to obtain a uniform mixture III; and

S5, under an air or oxygen atmosphere, the mixture III was subjected to a second sintering at a constant temperature $T_2$ of 700° C for a constant temperature duration t2 of 10 hours, and then the mixture was directly sieved to obtain a cathode material A1. Some process conditions and the composition of the cathode material A1 were detailed in Table 2.

The physicochemical parameters of the cathode material A1 were tested, and the results were shown in Table 3.

The cathode material A1 was assembled into a CR2025 button cell, and electrochemical performances and thermal stability of the cell were tested. The results were shown in Table 4.

**Example 2**

Example 2 was performed according to the method in Example 1. Example 2 differed from Example 1 in that in step S1, the ratio of cobalt oxyhydroxide to cobaltous hydroxide was adjusted, allowing the ratio of the peak intensity of the characteristic peak at 38.5° to the peak intensity of the characteristic peak at 37.4° measured by XRD of the cobalt additive to be 1:4. In this way, a cathode material A2 was prepared.

**Example 3**

Example 3 was performed according to the method in Example 1. Example 3 differed from Example 1 in that in step S2, $Ni_{0.6}Co_{0.2}Mn_{0.2}(OH)_2$ was replaced with $Ni_{0.8}Co_{0.1}Mn_{0.1}(OH)_2$, and the others remained unchanged. In this way, a cathode material A3 was prepared.

**Example 4**

Example 4 was performed according to the method in Example 1. Example 4 differed from Example 1 in that in step S1, the ratio of cobalt oxyhydroxide to cobaltous hydroxide was adjusted, allowing the ratio of the peak intensity of the characteristic peak at 38.5° to the peak intensity of the characteristic peak at 37.4° measured by XRD of the cobalt additive to be 1:7. In this way, a cathode material A4 was prepared.

**Example 5**

Example 5 was performed according to the method in Example 1. Example 5 differed from Example 1 in that in step S4, $Al_2O_3$ was not added, only the cobalt additive was added, [n(Ni)+n(Co)+n(Mn)+n(Zr)]:n(Co)=1:0.02, and the others remained unchanged. In this way, a cathode material A5 was prepared.

**Example 6**

Example 6 was performed according to the method in Example 1. Example 6 differed from Example 1 in that in step S2, $Ni_{0.6}Co_{0.2}Mn_{0.2}(OH)_2$, lithium carbonate, $Al_2O_3$, and $SrCO_3$ were coated and mixed according to a molar ratio of [n(Ni)+n(Co)+n(Mn)]: n(Li): n(Al): n(Sr)=1:1.03:0.00015:0.00005, and the others remained unchanged. In this way, a cathode material A6 was prepared.

**Example 7**

Example 7 was performed according to the method in Example 1. Example 7 differed from Example 1 in that in step S1, the ratio of cobalt oxyhydroxide to cobaltous hydroxide was adjusted, allowing the ratio of the peak intensity of the characteristic peak at 38.5° to the peak intensity of the characteristic peak at 37.4° measured by XRD of the cobalt additive to be 1:1.4. In this way, a cathode material A7 was prepared.

**Example 8**

Example 8 was performed according to the method in Example 1. Example 8 differed from Example 1 in that in step S4, the in-process product II of the cathode material, the cobalt additive obtained in step S1, and $Al_2O_3$ were coated and mixed according to a molar ratio of [n(Ni)+n(Co)+n(Mn)+n(Zr)]:n(Co):n(Al)=1:0.01:0.0001, and the others remained unchanged. In this way, a cathode material A8 was prepared.

### Example 9

Example 9 was performed according to the method in Example 1. Example 9 differed from Example 1 in that in step S4, the in-process product II of the cathode material, the cobalt additive obtained in step S1, and $Al_2O_3$ were coated and mixed according to a molar ratio of [n(Ni)+n(Co)+n(Mn)+n(Zr)]:n(Co):n(Al)=1:0.04:0.0001, and the others remained unchanged. The cathode material A9 was prepared.

### Example 10

Example 10 was performed according to the method in Example 1. Example 10 differed from Example 1 in that in step S3, the mixture I was subjected to a first sintering at a constant temperature $T_1$ of 930°C for a constant temperature duration $t_1$ of 9.5 hours, and the others remained unchanged. In this way, a cathode material A10 was prepared.

### Example 11

Example 11 was performed according to the method in Example 1. Example 11 differed from Example 1 in that in step S3, the mixture I was subjected to a first sintering at a constant temperature $T_1$ of 980°C for a constant temperature duration $t_1$ of 7 hours, and the others remained unchanged. In this way, a cathode material A11 was prepared.

### Example 12

Example 12 was performed according to the method in Example 1. Example 12 differed from Example 1 in that in step S1, airflow mill crushing strength was adjusted to enable $D_{50}$ of the cobalt additive to be 7.90 $\mu$m. In this way, a cathode material A12 was prepared.

### Example 13

Example 13 was performed according to the method in Example 1. Example 13 differed from Example 1 in that in step S1, airflow mill crushing strength was adjusted to enable $D_{50}$ of the cobalt additive to be 1.2 $\mu$m and $K_{90}$ to be 2.2. In this way, a cathode material A13 was prepared.

### Comparative Example 1

Comparative Example 1 was performed according to the method in Example 1. Comparative Example 1 differed from Example 1 in that in step S1, the ratio of cobalt oxyhydroxide to cobaltous hydroxide was adjusted, allowing the ratio of the peak intensity of the characteristic peak at 38.5° to the peak intensity of the characteristic peak at 37.4° measured by XRD of the cobalt additive to be 1:8. In this way, a cathode material D1 was prepared.

### Comparative Example 2

Comparative Example 2 was performed according to the method in Example 1. Comparative Example 2 differed from Example 1 in that in step S1, the ratio of cobalt oxyhydroxide to cobaltous hydroxide was adjusted, allowing the ratio of the peak intensity of the characteristic peak at 38.5° to the peak intensity of the characteristic peak at 37.4° measured by XRD of the cobalt additive to be 1:0.2. In this way, a cathode material D2 was prepared.

### Comparative Example 3

Comparative Example 3 was performed according to the method in Example 1. Comparative Example 3 differed from Example 1 in that in step S1, only cobalt oxyhydroxide was used. In this way, a cathode material D3 was prepared.

### Comparative Example 4

Comparative Example 4 was performed according to the method in Example 1. Comparative Example 4 differed from Example 1 in that in step S1, only cobaltous hydroxide was used. In this way, a cathode material D4 was prepared.

### Comparative Example 5

Comparative Example 5 was performed according to the method in Example 1. Comparative Example 5 differed from Example 1 in that in step S3, a constant temperature $T_1$ of the first sintering was 1,020°C, and the others remained unchanged. In this way, a cathode material D5 was prepared.

[Table 1]

| Name | Ratio of peak intensity at 38.5° to 37.4° | Mass percentage of element Co in total compound | $D_{(Co)50}$ | $K_{(Co)90}$ |
|---|---|---|---|---|
| Example 1 | 1:2 | 62.4% | 0.96 μm | 1.4 |
| Example 2 | 1:4 | 61.9% | 0.99 μm | 1.7 |
| Example 3 | 1:2 | 62.4% | 0.96 μm | 1.4 |
| Example 4 | 1:7 | 62.2% | 0.91 μm | 1.5 |
| Example 5 | 1:2 | 62.4% | 0.96 μm | 1.4 |
| Example 6 | 1:2 | 62.4% | 0.96 μm | 1.4 |
| Example 7 | 1:1.4 | 61.8% | 0.92 μm | 1.6 |
| Example 8 | 1:2 | 62.4% | 0.96 μm | 1.4 |
| Example 9 | 1:2 | 62.4% | 0.96 μm | 1.4 |
| Example 10 | 1:2 | 62.4% | 0.96 μm | 1.4 |
| Example 11 | 1:2 | 62.4% | 0.96 μm | 1.4 |
| Example 12 | 1:2 | 63.2% | 7.90 μm | 2.2 |
| Example 13 | 1:2 | 62.1% | 1.20 μm | 2.2 |
| Comparative Example 1 | 1:8 | 62.7% | 0.93 μm | 1.5 |
| Comparative Example 2 | 1:0.2 | 61.1% | 0.93 μm | 1.4 |
| Comparative Example 3 | / | 64.2% | 2.43 μm | 1.4 |
| Comparative Example 4 | / | 63.7% | 1.54 μm | 1.6 |
| Comparative Example 5 | 1:2 | 62.4% | 0.96 μm | 1.4 |

[Table 2]

| | Example 1 | Example 2 | Example 3 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.8}Co_{0.1}Mn_{0.1}(OH)_2$ |

(continued)

|  | Example 1 | Example 2 | Example 3 |
|---|---|---|---|
| Additive containing element G | $ZrO_2$ | $ZrO_2$ | $ZrO_2$ |
| [n(Ni)+n(Co)+n(Mn)] :n(Li):n(G) | 1:1.03:0.0002 | 1:1.03:0.0002 | 1:1.03:0.0002 |
| $T_1/°C$ | 950 | 950 | 950 |
| $t_1/h$ | 8 | 8 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.8}Mn_{0.1}Co_{0.1})Zr_{0.0002}O_2$ |
| Additive containing element M | $Al_2O_3$ | $Al_2O_3$ | $Al_2O_3$ |
| [n(Ni)+n(Co)+n(Mn)+n(Zr)]:n(Co):n(M) | 1:0.02:0.0001 | 1:0.02:0.0001 | 1:0.02:0.0001 |
| $T_2/°C$ | 700 | 700 | 700 |
| $t_2/h$ | 10 | 10 | 10 |

[Table 2 (continued)]

|  | Example 4 | Example 5 | Example 6 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.6}Co_{0.2}Mn_{0.2}(OH)_2$ |
| Additive containing element G | $ZrO_2$ | $ZrO_2$ | $Al_2O_3$, $SrO_3$ |
| [n(Ni)+n(Co)+n(Mn)] :n(Li):n(G) | 1:1.03:0.0002 | 1:1.03:0.0002 | 1: 1.03:0.00015:0.00005 |
| $T_1/°C$ | 950 | 950 | 950 |
| $t_1/h$ | 8 | 8 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Al_{0.00015}Sr_{0.00005}O_2$ |
| Additive containing element M | $Al_2O_3$ | / | $Al_2O_3$ |
| [n(Ni)+n(Co)+n(Mn)+n(Zr)]:n(Co):n(M) | 1:0.02:0.0001 | 1:0.02 | 1:0.02:0.0001 |
| $T_2/°C$ | 700 | 700 | 700 |
| $t_2/h$ | 10 | 10 | 10 |

[Table 2 (continued)]

|  | Example 7 | Example 8 | Example 9 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.6}Co_{0.2}Mn_{0.2}(OH)_2$ |
| Additive containing element G | $ZrO_2$ | $ZrO_2$ | $ZrO_2$ |

(continued)

| | Example 7 | Example 8 | Example 9 |
|---|---|---|---|
| $[n(Ni)+n(Co)+n(Mn)]:n(Li):n(G)$ | 1:1.03:0.0002 | 1:1.03:0.0002 | 1:1.03:0.0002 |
| $T_1/°C$ | 950 | 950 | 950 |
| $t_1/h$ | 8 | 8 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ |
| Additive containing element M | $Al_2O_3$ | $Al_2O_3$ | $Al_2O_3$ |
| $[n(Ni)+n(Co)+n(Mn)+n(Zr)]:n(Co):n(M)$ | 1:0.04:0.0001 | 1:0.02:0.0001 | 1:0.01:0.0001 |
| $T_2/°C$ | 700 | 700 | 700 |
| $t_2/h$ | 10 | 10 | 10 |

[Table 2 (continued)]

| | Example 10 | Example 11 | Example 12 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.6}Co_{0.2}Mn_{0.2}(OH)_2$ |
| Additive containing element G | $ZrO_2$ | $ZrO_2$ | $ZrO_2$ |
| $[n(Ni)+n(Co)+n(Mn)]:n(Li):n(G)$ | 1:1.03:0.0002 | 1:1.03:0.0002 | 1:1.03:0.002 |
| $T_1/°C$ | 930 | 980 | 950 |
| $t_1/h$ | 9.5 | 7 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ |
| Additive containing element M | $Al_2O_3$ | $Al_2O_3$ | $Al_2O_3$ |
| $[n(Ni)+n(Co)+n(Mn)+n(Zr)]:n(Co):n(M)$ | 1:0.02:0.0001 | 1:0.02:0.0001 | 1:0.02:0.0001 |
| $T_2/°C$ | 700 | 700 | 700 |
| $t_2/h$ | 10 | 10 | 10 |

[Table 2 (continued)]

| | Example 13 | Comparative Example 1 | Comparative Example 2 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.6}Co_{0.2}Mn_{0.2}(OH)_2$ |
| Additive containing element G | $ZrO_2$ | $ZrO_2$ | $ZrO_2$ |
| $[n(Ni)+n(Co)+n(Mn)]:n(Li):n(G)$ | 1:1.03:0.002 | 1:1.03:0.0002 | 1:1.03:0.0002 |
| $T_1/°C$ | 950 | 950 | 950 |

(continued)

|  | Example 13 | Comparative Example 1 | Comparative Example 2 |
|---|---|---|---|
| $t_1$/h | 8 | 8 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ |
| Additive containing element M | $Al_2O_3$ | $Al_2O_3$ | $Al_2O_3$ |
| $[n(Ni)+n(Co)+n(Mn)+n(Zr)]:n(Co):n(M)$ | 1:0.02:0.0001 | 1:0.02:0.0001 | 1:0.02:0.0001 |
| $T_2$/°C | 700 | 700 | 700 |
| $t_2$/h | 10 | 10 | 10 |

[Table 2 (continued)]

|  | Comparative Example 3 | Comparative Example 4 | Comparative Example 5 |
|---|---|---|---|
| Composition of precursor | $Ni_{0.6}Co_{0.2}Mn_{0.2}(OH)_2$ | $Ni_{0.6}Co_{0.2}Mn_{0.2}(OH)_2$ | $Ni_{0.6}Co_{0.2}Mn_{0.2}(OH)_2$ |
| Additive containing element G | $ZrO_2$ | $ZrO_2$ | $ZrO_2$ |
| $[n(Ni)+n(Co)+n(Mn)]:n(Li):n(G)$ | 1:1.03:0.002 | 1:1.03:0.002 | 1:1.03:0.002 |
| $T_1$/°C | 950 | 950 | 1020 |
| $t_1$/h | 8 | 8 | 8 |
| Composition of matrix | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ | $Li_{1.03}(Ni_{0.6}Mn_{0.2}Co_{0.2})Zr_{0.0002}O_2$ |
| Additive containing element G | $Al_2O_3$ | $Al_2O_3$ | $Al_2O_3$ |
| $[n(Ni)+n(Co)+n(Mn)+n(Zr)]:n(Co):n(M)$ | 1:0.02:0.0001 | 1:0.02:0.0001 | 1:0.02:0.0001 |
| $T_2$/°C | 700 | 700 | 700 |
| $t_2$/h | 10 | 10 | 10 |

[Table 3]

| Item | Grain diameter R (nm) | Average particle size D (μm) | D/R | $D_{50}$ (μm) | Microscopic stress | $Ni^{2+}$ (%) |
|---|---|---|---|---|---|---|
| Example 1 | 989 | 1.8 | 1.82 | 3.8 | 0.03 | 2.4 |
| Example 2 | 992 | 1.9 | 1.92 | 3.9 | 0.04 | 2.8 |
| Example 3 | 970 | 1.6 | 1.65 | 3.2 | 0.03 | 1.7 |
| Example 4 | 962 | 1.9 | 1.98 | 3.7 | 0.12 | 3.2 |
| Example 5 | 971 | 1.6 | 1.65 | 3.8 | 0.02 | 2.7 |
| Example 6 | 955 | 1.6 | 1.68 | 3.9 | 0.04 | 3.2 |
| Example 7 | 995 | 1.7 | 1.71 | 3.7 | 0.10 | 3.2 |
| Example 8 | 978 | 1.7 | 1.74 | 3.8 | 0.08 | 1.9 |
| Example 9 | 991 | 1.5 | 1.51 | 3.8 | 0.04 | 2.7 |

(continued)

| Item | Grain diameter R (nm) | Average particle size D (μm) | D/R | $D_{50}$ (μm) | Microscopic stress | $Ni^{2+}$ (%) |
|---|---|---|---|---|---|---|
| Example 10 | 940 | 1.8 | 1.91 | 3.8 | 0.08 | 2.9 |
| Example 11 | 988 | 1.6 | 1.62 | 3.9 | 0.06 | 3.1 |
| Example 12 | 999 | 1.9 | 1.90 | 3.7 | 0.11 | 3.5 |
| Example 13 | 1019 | 1.9 | 1.86 | 3.7 | 0.14 | 3.4 |
| Comparative Example 1 | 1030 | 2 | 1.94 | 3.7 | 0.17 | 4.8 |
| Comparative Example 2 | 1002 | 1.9 | 1.90 | 3.7 | 0.21 | 5.3 |
| Comparative Example 3 | 1023 | 2.0 | 1.96 | 3.7 | 0.17 | 4.9 |
| Comparative Example 4 | 979 | 2.0 | 2.04 | 3.9 | 0.26 | 6.3 |
| Comparative Example 5 | 1182 | 3.3 | 2.79 | 3.9 | 0.34 | 9.8 |

[Table 4]

| Test items | 4.4V-0.1C discharge capacity/(mAh/g) | 4.4V-0.3C discharge capacity/(mAh/g) | 4.5V retention rate for 80 cycles/% | DSC exothermic peak temperature/°C |
|---|---|---|---|---|
| Example 1 | 198.3 | 192.4 | 96.8 | 258 |
| Example 2 | 197.9 | 191.7 | 97.1 | 256 |
| Example 3 | 207.8 | 201.3 | 94.7 | 249 |
| Example 4 | 197.2 | 191 | 95.1 | 252 |
| Example 5 | 197.7 | 191.1 | 97.1 | 258 |
| Example 6 | 196.9 | 191.4 | 96.7 | 253 |
| Example 7 | 196 | 190.9 | 95.1 | 252 |
| Example 8 | 196.3 | 191.7 | 96.9 | 251 |
| Example 9 | 197.9 | 191.7 | 96.7 | 253 |
| Example 10 | 197.8 | 191 | 96.9 | 252 |
| Example 11 | 197.1 | 192 | 96.4 | 254 |
| Example 12 | 195.8 | 190.1 | 93.8 | 247 |
| Example 13 | 195.4 | 189.7 | 93.1 | 249 |
| Comparative Example 1 | 193.2 | 187.4 | 91.5 | 238 |
| Comparative Example 2 | 194.1 | 188.4 | 92.9 | 236 |
| Comparative Example 3 | 193.7 | 187.9 | 92.8 | 242 |
| Comparative Example 4 | 193.3 | 187.0 | 91.3 | 241 |
| Comparative Example 5 | 191.2 | 185.4 | 88.5 | 238 |

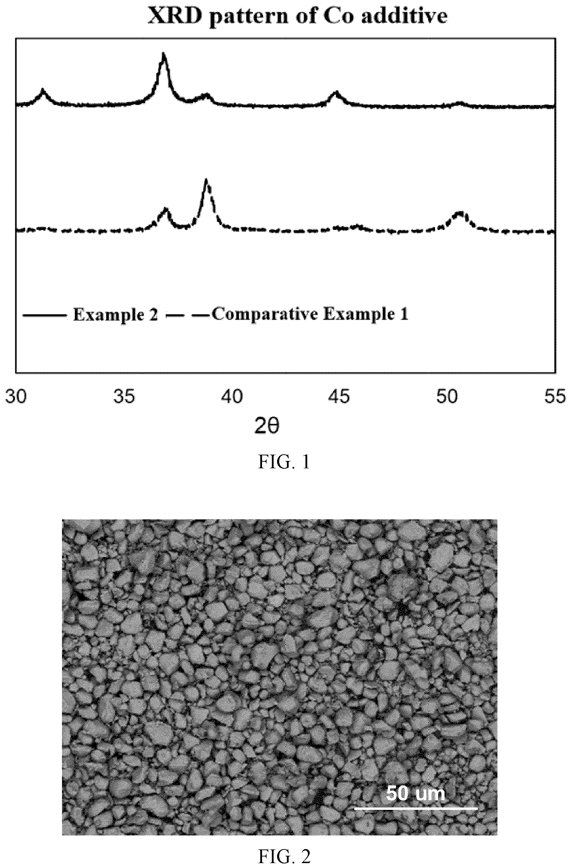

FIG. 1 is XRD patterns of the cobalt additives of Example 2 and Comparative Example 1. Table 1 and Table 4 reveal that the cobalt additives have different ratios of the peak intensity of the characteristic peak at 38.5° to the peak intensity of the characteristic peak at 37.4° measured by XRD. Thus, when the prepared cathode materials are used in the lithium-ion batteries, the electrical performances of the lithium-ion batteries are also quite different. Further, when the ratio of the peak intensity of the characteristic peak at 38.5° to the peak intensity of the characteristic peak at 37.4° measured by XRD of the cobalt additive is within the range defined in the present disclosure, the lithium-ion battery adopting the cathode material prepared therefrom exhibits higher capacity and excellent cycle retention rate.

Based on Example 1, Example 2, Example 7 and Comparative Example 1 and Comparative Example 2, it can be known that: compared with Example 1 and Example 2, in which the ratio of peak intensity of the cobalt additives measured by XRD is within the range defined by the present disclosure, the capacity and cycle retention rate of the lithium-ion battery prepared from the cathode material of Example 7, in which the ratio of peak intensity measured by XRD of the cobalt additive goes beyond the preferred range of the present disclosure, are both reduced, but still higher than that of Comparative Example 1 and Comparative Example 2, in which the ratio of peak intensity measured by XRD of the cobalt additives is not within the range defined by the present disclosure; and for the lithium-ion batteries containing the cathode materials prepared in Comparative Example 1 and Comparative Example 2, the capacity is reduced, and the rate and cycle retention rate at high temperature are both reduced.

Based on Example 1, Example 5, Example 6, and Example 8 to Example 11, it can be known that the XRD structural characteristics of the cathode material is not affected by the presence or absence of the coating element M in the cathode material, a change in the type of the doping element G, a change in the amount of the used cobalt additive, and a change in the conditions of the first sintering. As long as the cathode material contains the coating layer formed by the cobalt additive defined in the present disclosure, the prepared cathode material can have the specific XRD structural characteristics of the present disclosure. In addition, when such a cathode material is used in a lithium-ion battery, the electrical performances of the battery can be significantly improved compared to those in the related art.

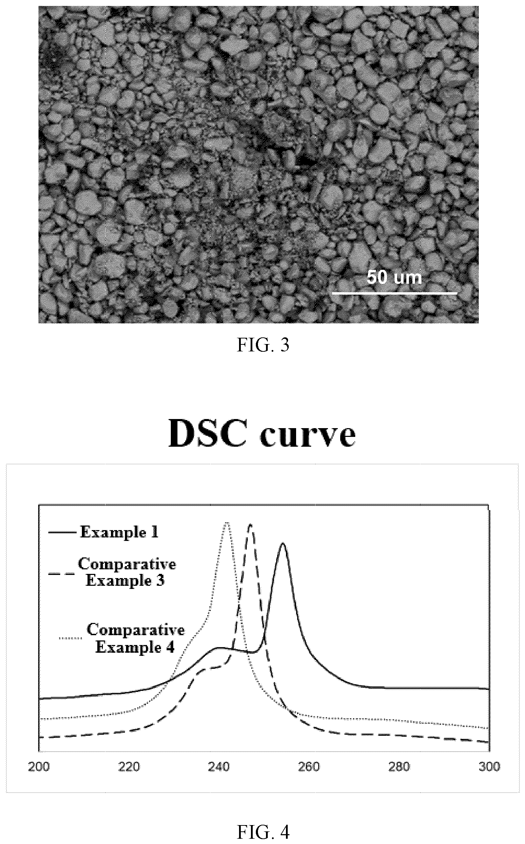

FIG. 2 is an SEM image of the cathode material of Example 1, and FIG. 3 is an SEM image of the cathode material of Example 12. FIG. 2 and FIG. 3 reveal that compared with Example 1, the coating state on the surface of the cathode material of Example 12 is significantly worse. A large number of cobalt agglomerated particles (in particular many enriched small particles in the middle part) appear in the SEM image, and some surfaces of the cathode material are still partially exposed after the coating, indicating that the additive in the Comparative Example 3 can hardly be mixed evenly. The reason may be in that the $D_{50}$ of the cobalt additive in Example 12 is larger and more particles are adhered. Based on Example 1, Example 12, and Example 13, it can be known that the cobalt additive has great $K_{90}$ and wider particle size distribution, and it is more difficult to mix evenly under the same conditions. Therefore, the use of the cobalt additive with excessively great $D_{50}$ and/or excessively great $K_{90}$ for product preparation may cause a significant deterioration of the electrical performances of the finished cathode material due to the uneven mixing.

In Comparative Example 3 and Comparative Example 4, the cobalt additive is a single additive of cobalt oxyhydroxide or cobaltous hydroxide, having $D_{50}$ within the range defined by the present disclosure. However, the finished cathode materials prepared using such an additive have poor performances compared with the material in Example 1. FIG. 4 is DSC patterns of the cobalt cathode materials of Example 1, Comparative Example 3, and Comparative Example 4. From the DSC data of FIG. 4, it can be seen that the cathode material prepared in Example 1 has the optimal thermal stability. Due to the +3 valence of cobalt in cobalt oxyhydroxide, which is the same as the average valence of nickel, cobalt, and manganese in the cathode material, it can well enter the interior of the material to make up for the lattice defects, without causing a change in the valence state of nickel and manganese elements, thereby playing a role in stabilizing the material. Therefore, the DSC peak values of Example 1 and Comparative Example 3 are higher than that of Comparative Example 4. When the temperature corresponding to the peak value is higher, the temperature required for the occurrence of combustion or even explosion is also higher. That is, the higher peak value represents higher stability. Compared with the single additive of cobalt oxyhydroxide, the cobalt additive prepared by the method of the present disclosure can further increase the DSC peak value and thus improve the thermal stability, which is beneficial to further improve the stability of the battery prepared with the cathode material.

In Comparative Example 5, the sintering temperature is excessively high, resulting in an excessively great value of D/R, which leads to a greater crystal structure of the cathode material, a weak transmission capacity of the lithium ions inside the material, and an intensified lithium-nickel disorder inside the material, thereby ultimately causing the deterioration of the capacity and cycle performance of the material.

The XRD refinement data in Table 3 reveal that the cathode material according to the present disclosure contains less $Ni^{2+}$, indicating a lower disorder degree and a relatively stable lithium nickel layer. At the same time, the values of the microscopic residual stress in the examples are lower than those in the comparative examples. A greater stress value indicates a higher degree of defects inside the material and a higher risk of material breakage during the cycling. The cathode materials according to the present disclosure has low microscopic stress, low content of disordering nickel, and the specific XRD structural characteristics, enabling the cathode materials to have excellent stability.

The preferred embodiments of the present disclosure are described in detail above. However, the present disclosure is not limited thereto. Within the scope of technical concept of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

**Claims**

1.    A cathode material, wherein:

the cathode material has a microscopic residual stress measured by X-ray Diffraction (XRD) and ranging from 0.01 to 0.15; and
the cathode material has an average diameter D measured by scanning electron microscope (SEM) and a grain diameter R measured by XRD, where D/R ranges from 1.4 to 2.5.

2. The cathode material according to claim 1, wherein:

the microscopic residual stress measured by XRD of the cathode material ranges from 0.03 to 0.15; and
preferably, D/R ranges from 1.4 to 2.

3. The cathode material according to claim 1 or 2, wherein:

the average diameter D of the cathode material ranges from 1 $\mu$m to 3 $\mu$m, and preferably, from 1.5 $\mu$m to 2 $\mu$m;
preferably, the grain diameter R of the cathode material ranges from 700 nm to 1,200 nm, and preferably, from 900 nm to 1,000 nm;
preferably, the cathode material has a median particle size $D_{50}$ ranging from 3 $\mu$m to 4.5 $\mu$m; and
preferably, a content of disordering nickel in the cathode material ranges from 0 wt% to 4 wt%, and preferably, from 0 wt% to 3 wt%.

4. The cathode material according to any one of claims 1 to 3, comprising:

a matrix; and
a coating layer coated on the matrix;
wherein the matrix has a composition represented by Formula I:

$$Li_{1+a}Ni_xMn_yCo_zG_bO_2 \qquad \text{Formula I}$$

, where:

$-0.05 \leq a \leq 0.1$, $0 \leq b \leq 0.05$, $0.5 \leq x < 1$, $0 < y < 0.5$, and $0 \leq z < 0.5$; and G is selected from at least one of W, V, Ta, Zr, La, Ce, Er, Sr, Si, Al, Mg, and Y; and
wherein the coating layer comprises a lithium oxide compound containing element cobalt and/or an oxide containing element cobalt;
optionally, the coating layer further comprises a lithium oxide compound containing element M and/or an oxide containing element M, where M is selected from at least one of B, Al, Nb, Mn, Mo, W, Si, Mg, Ti, and Zr; and
preferably, a molar amount of element cobalt n'(Co) in the coating layer, a molar amount of element M n(M) in the coating layer, and a total molar amount of metal elements other than Li [n(Ni)+n(Co)+n(Mn)+n(G)] in the matrix satisfy:

$$0.001 \leq n'(Co):[n(Ni)+n(Co)+n(Mn)+n(G)] \leq 0.05;$$

and

$$0 \leq n(M):[n(Ni)+n(Co)+n(Mn)+n(G)] \leq 0.05.$$

5. The cathode material according to any one of claims 1 to 4, wherein:

the cathode material has a residual alkali content ranging from 1,000 ppm to 10,000 ppm, and preferably, from 1,000 ppm to 6,000 ppm;
preferably, when $0.5 \leq x < 0.8$, the residual alkali content of the cathode material ranges from 1,000 ppm to 3,000 ppm, or when $0.8 \leq x < 1$, the residual alkali content the cathode material ranges from 4,000 ppm to 6,000 ppm.

6. A method for preparing a cathode material, comprising:

(1) mixing a precursor of the cathode material, a lithium source, and an additive optionally containing element G, to obtain a mixture I;

(2) performing a first sintering on the mixture I under an air or oxygen atmosphere, to obtain an in-process product II of the cathode material;

(3) mixing the in-process product II of the cathode material, a cobalt additive, and an additive optionally containing element M, to obtain a mixture III; and

(4) performing a second sintering on the mixture III under an air or oxygen atmosphere, to obtain the cathode material,

wherein:

for the cobalt additive, a ratio of a peak intensity of a characteristic peak at 38.5° to a peak intensity of a characteristic peak at 37.4° measured by XRD is 1: (1.1 to 7.5); and

a constant temperature $T_1$ of the first sintering is lower than or equal to 1,000°C.

7. The method according to claim 6, wherein:

for the cobalt additive, the ratio of the peak intensity of the characteristic peak at 38.5° to the peak intensity of the characteristic peak at 37.4° measured by XRD is 1: (2 to 4.5);

preferably, the cobalt additive has a median particle size $D_{(Co)50}$ ranging from 0.5 $\mu$m to 5 $\mu$m, and preferably, from 0.5 $\mu$m to 3 $\mu$m; and the cobalt additive has a particle size distribution $K_{(Co)90}=(D_{90}-D_{10})/D_{(Co)50}$ satisfying $0.8 \leq K_{(Co)90} \leq 2$, and preferably, $1 \leq K_{(Co)90} \leq 1.8$; and

preferably, the constant temperature $T_1$ of the first sintering ranges from 700°C to 1,000°C.

8. The method according to claim 6 or 7, wherein:

a content of element Co ranges from 55 wt% to 75 wt% based on a total weight of the cobalt additive;

preferably, a constant temperature duration $t_1$ of the first sintering is shorter than or equal to 15 hours, and preferably, from 6 hours to 12 hours;

preferably, a constant temperature $T_2$ of the second sintering satisfies $T_1 > T_2$; and

preferably, a constant temperature duration $t_1$ of the second sintering satisfies $t_1 > t_2$.

9. The method according to any one of claims 6 to 8, wherein:

a total molar amount of metal elements $[n(Ni)+n(Mn)+n(Co)]$ in the precursor of the cathode material, a molar amount of element Li $n(Li)$ in the lithium source, and a molar amount of element G $n(G)$ in the additive containing element G satisfy: $0.95 \leq n(Li)/[n(Ni)+n(Mn)+n(Co)] \leq 1.1$, and $0 \leq n(G)/[n(Ni)+n(Mn)+n(Co)] \leq 0.05$; and

preferably, a total molar amount of metal elements $[n(Ni)+n(Co)+n(Mn)+n(G)]$ in the in-process product II of the cathode material, a molar amount of element cobalt $n'(Co)$ in the cobalt additive, and a molar amount of element M $n(M)$ in the additive containing element M satisfy $0.001 \leq n'(Co)/[n(Ni)+n(Co)+n(Mn)+n(G)] \leq 0.05$, and $0 \leq n(M)/[n(Ni)+n(Co)+n(Mn)+n(G)] \leq 0.05$.

10. A cathode material, prepared by the method according to any one of claims 6 to 9.

11. A lithium-ion battery, comprising the cathode material according to any one of claims 1 to 5 and claim 10.

## XRD pattern of Co additive

FIG. 1

FIG. 2

FIG. 3

# DSC curve

FIG. 4

## INTERNATIONAL SEARCH REPORT

| International application No. |
| --- |
| **PCT/CN2023/097716** |

### A. CLASSIFICATION OF SUBJECT MATTER

H01M4/36(2006.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT, STN: 正极材料, X射线衍射, 扫描电镜, 残余应力, 平均直径, 平均粒径, 晶粒, 衍射峰, positive, XRD, SEM, residual stress, diameter, grain, peak

### C. DOCUMENTS CONSIDERED TO BE RELEVANT

| Category* | Citation of document, with indication, where appropriate, of the relevant passages | Relevant to claim No. |
| --- | --- | --- |
| A | CN 111969200 A (HUNAN SHANSHAN ENERGY TECHNOLOGY CO., LTD.) 20 November 2020 (2020-11-20) description, paragraphs 6-19 | 1-11 |
| A | CN 113422046 A (HUNAN SHANSHAN ENERGY TECHNOLOGY CO., LTD.) 21 September 2021 (2021-09-21) description, paragraphs 7-20 | 1-11 |
| A | CN 115084472 A (BEIJING EASPRING MATERIAL TECHNOLOGY CO., LTD.) 20 September 2022 (2022-09-20) description, paragraphs 25-132 | 1-11 |
| A | US 2022093913 A1 (SAMSUNG SDI CO., LTD.) 24 March 2022 (2022-03-24) description, paragraphs 35-65 | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 January 2024** | **30 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/097716** |

**Box No. III     Observations where unity of invention is lacking (Continuation of item 3 of first sheet)**

This International Searching Authority found multiple inventions in this international application, as follows:

Independent claim 1 and independent claim 11, which refers to claim 1, and independent claims 6 and 10 and independent claim 11, which refers to claim 10, do not have a same or corresponding special technical feature. Therefore, said claims lack unity of invention, and constitute multiple inventions.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**     ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/097716**

| Patent document cited in search report | | | Publication date (day/month/year) | Patent family member(s) | | | Publication date (day/month/year) |
|---|---|---|---|---|---|---|---|
| CN | 111969200 | A | 20 November 2020 | CN | 111969200 | B | 04 November 2022 |
| CN | 113422046 | A | 21 September 2021 | CN | 113422046 | B | 01 November 2022 |
| CN | 115084472 | A | 20 September 2022 | CN | 115084472 | B | 26 May 2023 |
| US | 2022093913 | A1 | 24 March 2022 | US | 2023317923 | A1 | 05 October 2023 |
| | | | | KR | 20220040933 | A | 31 March 2022 |
| | | | | KR | 102424398 | B1 | 21 July 2022 |
| | | | | US | 11728473 | B2 | 15 August 2023 |
| | | | | EP | 3974390 | A1 | 30 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310575361